# EUROPEAN PATENT APPLICATION

(11) **EP 4 664 032 A1**
(43) Date of publication of application: **17.12.2025**
(21) Application number: 24202214.3
(22) Date of filing: 24.09.2024
(51) Int. Cl.: F24F 12/00, F24F 13/20

(54) **VENTILATION APPARATUS**

(30) Priority: 12.06.2024 KR 20240076595
(71) Applicant: LG Electronics Inc., Yeongdeungpo-gu Seoul 07336 (KR)
(72) Inventor: PARK, Janghee, 08592 Seoul (KR); JEONG, Yongki, 08592 Seoul (KR); LEE, Jinwoo, 08592 Seoul (KR)
(74) Representative: Vossius & Partner Patentanwälte Rechtsanwälte mbB

(57) **Abstract**

A ventilation apparatus according to an embodiment of the present invention comprises: a housing, including: an indoor air inlet and an outdoor air outlet which are formed to be spaced apart from each other on one side; and an outdoor air inlet and an indoor air outlet which are formed to be spaced apart from each other on the other side corresponding to an opposite side of the one side, wherein the outdoor air inlet is formed at a position opposite to the indoor air inlet and the indoor air outlet is formed at a position opposite to the outdoor air outlet; a case accommodated in the housing; an intake fan mounted inside the case and having an outlet connected to the outdoor air outlet; an exhaust fan mounted inside the case and having an outlet connected to the indoor air outlet; and a total heat exchange element mounted inside the case and placed at a point where a flow passage connecting the indoor air inlet and the indoor air outlet and a flow passage connecting the outdoor air inlet and the outdoor air outlet intersect, wherein an intake side bypass passage that guides outdoor air flowing into the outdoor air inlet to a space where the intake fan is located, and an exhaust side bypass passage that guides indoor air flowing into the indoor air inlet to a space where the exhaust fan is located, by bypassing the total heat exchange element are respectively formed on a bottom surface of the case.

## Description

The present invention relates to ventilation apparatus.

A ventilation apparatus is a device for discharging indoor air to the outside and supplying fresh outdoor air to the indoor, and its main component is a total heat exchange element that allows only heat exchange without mixing between the discharged indoor air and the incoming outdoor air.

The ventilation apparatus may be installed in houses, including apartments, or commercial buildings. In particular, in the case of an apartment, there may be a blueprint in which two households with a symmetrical structure face each other or are arranged side by side. In this case, it is necessary to ensure that the same ventilation apparatus is installed in both symmetrical households.

However, some ventilation apparatuses currently on the market, including the ventilation apparatuses disclosed in the prior art below, have an asymmetric internal structure. A ventilation apparatus with an asymmetrical internal structure has the limitation that it cannot be installed in one of two households with a symmetrical structure. To solve this problem, conventionally, a separate kit that converts the flows of indoor air and outdoor air is installed in the ventilation apparatus.

In addition, recently, as disclosed in the prior art below, ventilation apparatuses have been released that are provided with a bypass passage inside that allows indoor air to be bypassed and discharged directly to the outdoors without passing through the total heat exchange element.

However, since the ventilation apparatus disclosed in the prior art below has an asymmetrical internal structure, there is a limitation that it cannot be installed in one of two apartments with a symmetrical structure.

Prior art: Korean Patent Publication No. 10-2022-0045405 (2022.04.12)

The present invention is proposed to improve the above problems.

A ventilation apparatus according to an embodiment of the present invention to achieve the above object comprises: a housing, including: an indoor air inlet and an outdoor air outlet which are formed to be spaced apart from each other on one side; and an outdoor air inlet and an indoor air outlet which are formed to be spaced apart from each other on the other side corresponding to an opposite side of the one side, wherein the outdoor air inlet is formed at a position opposite to the indoor air inlet and the indoor air outlet is formed at a position opposite to the outdoor air outlet; a case accommodated in the housing; an intake fan mounted inside the case and having an outlet connected to the outdoor air outlet; an exhaust fan mounted inside the case and having an outlet connected to the indoor air outlet; and a total heat exchange element mounted inside the case and placed at a point where a flow passage connecting the indoor air inlet and the indoor air outlet and a flow passage connecting the outdoor air inlet and the outdoor air outlet intersect, wherein an intake side bypass passage that guides outdoor air flowing into the outdoor air inlet to a space where the intake fan is located, and an exhaust side bypass passage that guides indoor air flowing into the indoor air inlet to a space where the exhaust fan is located, by bypassing the total heat exchange element are respectively formed on surfaces of the case.

The case includes: an intake guide hole formed at a side region of the case adjacent to the outdoor air outlet and communicating with the space where the intake fan is placed; an exhaust guide hole formed at another side region of the case adjacent to the indoor air outlet and communicating with the space where the exhaust fan is placed, wherein an outlet of the intake side bypass passage communicates with the intake guide hole, and wherein an outlet of the exhaust side bypass passage communicates with the exhaust guide hole.

The intake side bypass passage and the exhaust side bypass passage are configured to form shapes symmetrical about an imaginary dividing plane that bisects the case between the intake guide hole and the exhaust guide hole.

An inlet of the intake side bypass passage is spaced apart from the exhaust guide hole in a direction approaching the outdoor air inlet, and wherein an inlet of the exhaust side bypass passage is spaced apart from the intake guide hole in a direction approaching the indoor air inlet.

The intake side bypass passage includes: a first portion extending from the inlet of the intake side bypass passage towards the exhaust guide hole and bent to extend along an edge of the exhaust guide hole; and a second part bent at an end of the first part to communicate with the intake guide hole, and wherein the exhaust side bypass passage includes: a third portion extending from the inlet of the exhaust side bypass passage towards the intake guide hole and bent to extend along an edge of the intake guide hole; and a fourth part bent at an end of the second part to communicate with the exhaust guide hole.

The second part intersects the fourth part while passing above or below the fourth part, and the imaginary dividing plane passes a point where the second portion and the fourth portion intersect.

The ventilation apparatus further comprises: an intake side bypass damper module placed on the inlet of the intake side bypass passage; and an exhaust side bypass damper module placed on the inlet of the exhaust side bypass passage.

The ventilation apparatus further comprises: an intake side bypass filter unit placed between the inlet of the intake side bypass passage and the intake side bypass damper module; and an exhaust side bypass filter unit placed between the inlet of the exhaust side bypass passage and the exhaust side bypass damper module.

The ventilation apparatus further comprises: an intake side pre-filter installed at the outdoor air inlet; and an exhaust side pre-filter installed at the indoor air inlet.

The total heat exchange element includes four side surfaces facing the four corners of the housing, respectively. The four side surfaces include: a first side surface facing the outdoor air inlet; a second side surface facing the outdoor air outlet and being an opposite side of the first side surface; a third side surface facing the indoor air inlet; and a fourth side surface facing the indoor air outlet and being opposite side of the third side surface. The imaginary dividing plane is configured to pass through an edge where the first side surface and the third side surface meet and an edge where the second side surface and the fourth side surface meet.

The ventilation apparatus further comprises: an intake side HEPA filter disposed adjacent to the second side surface; and an exhaust side HEPA filter disposed adjacent to the fourth side surface.

The ventilation apparatus further comprises: an intake side main damper module disposed at a flow passage connecting the outdoor air inlet and the first side surface; and an exhaust side main damper module disposed at a flow passage connecting the indoor air inlet and the third side surface.

When the intake side main damper module is opened and the intake side bypass damper module is closed, the outdoor air flowing into the outdoor air inlet passes through the first side surface and the second side surface and is then guided to the intake fan.

When the intake side main damper module is closed and the intake side bypass damper module is opened, the outdoor air flowing into the outdoor air inlet passes through the intake side bypass filter unit and is then guided to the intake side bypass passage.

When the exhaust side main damper module is opened and the exhaust side bypass damper module is closed, the indoor air flowing into the indoor air inlet passes through the third side surface and the fourth side surface and is then guided to the exhaust fan.

When the exhaust side main damper module is closed and the exhaust side bypass damper module is opened, the indoor air flowing into the indoor air inlet passes through the exhaust side bypass filter unit and is then guided to the exhaust side bypass passage.

The case includes a bypass guide in which the intake and exhaust side bypass passages, the intake guide hole and the exhaust guide hole are formed. The bypass guide comprises a central partition wall that extends from an inner edge through which the imaginary dividing plane passes, to support a first corner of the total heat exchange element; an intake side central wall supporting at least one side surface of the intake side main damper module and a second corner of the total heat exchange element; an intake side main damper support wall supporting the other side of the intake side main damper module; a total heat exchange element support wall supporting a third corner of the total heat exchange element; an exhaust side central wall supporting at least one side surface of the exhaust side main damper module and a fourth corner of the total heat exchange element; and an exhaust side main damper support wall supporting the other side of the exhaust side main damper module.

The first edge is an edge where the fourth side surface and the second side surface meet, the second edge is an edge where the fourth side surface and the first side surface meet, the third edge is an edge where the first side surface and the third side surface meet, the fourth edge is an edge where the third side surface and the second side surface meet. By at least the central partition wall, the intake side central wall, the total heat exchange element support wall, and the exhaust side central wall, the outdoor air flow passage and the indoor air flow passage are separated from each other.

The bypass damper module includes: first and second dampers placed in parallel to each other; a drive motor that provides power to rotate the first and second dampers; and an opening/closing link that connects the driving motor and rotation shafts of the first and second dampers, respectively, to rotate the first and second dampers in directions symmetrical to each other, thereby opening or closing the inlet of the bypass passage.

The opening/closing link includes: a first link extending from the rotation shaft of the first damper; a second link extending from the rotation shaft of the second damper; a connection link connecting the first link and the second link; a driving link extending from the rotation shaft of the second damper; and a transmission link connecting the drive motor and the driving link.

The driving link extends at a point axially spaced apart from the second link, and the first link and the second link extend in opposite directions.

Each of the intake side bypass filter unit or the exhaust side bypass filter unit includes: a filter case in a hexahedron shape; and a filter inserted into the filter case, and wherein the filter is separable from the filter case.

The filter case includes an upper surface, a lower surface and four side surfaces, wherein a filter insertion hole is formed on one of the upper and lower surfaces, and wherein an inlet and an outlet are formed on two facing surfaces of the four side surfaces.

According to the ventilation apparatus according to an embodiment of the present invention, there is an advantage that the ventilation apparatus can be installed in both households designed symmetrically

In addition, since the intake side bypass passage and the exhaust side bypass passage are formed in a symmetrical structure, not only can indoor air be discharged directly to the outdoors without passing through the total heat exchange element, but also outdoor air can be supplied to the indoors without passing through the total heat exchange element. As a result, in situations where the temperature difference between indoors and outdoors is large, outdoor air can be supplied directly indoors without heat exchange, which has the advantage of quickly raising or lowering the indoor temperature depending on the season.

### Brief description of the drawings

Figure 1 is a plan perspective view of a ventilation apparatus according to an embodiment of the present invention.
Figure 2 is a bottom perspective view of the ventilation apparatus rotated along 2-2 in Figure 1;
Figures 3 and 4 are exploded perspective views showing the coupling relationship between the housing and flanges forming the ventilation apparatus.
Figure 5 is a plan view of the ventilation apparatus with the housing and flange removed.
Figure 6 is a bottom view of the ventilation apparatus with the housing and flange removed.
Figure 7 is a bottom perspective view of a case constituting a ventilation apparatus according to an embodiment of the present invention.
Figure 8 is a cross-sectional perspective view of the case cut along line 8-8 in Figure 7;
Figure 9 is a perspective view of a bypass damper module constituting a ventilation apparatus according to an embodiment of the present invention.
Figure 10 is an enlarged view of portion A of Figure 9.
Figure 11 is a perspective view of a bypass filter unit constituting a ventilation apparatus according to an embodiment of the present invention.
Figure 12 is an exploded perspective view of the bypass filter unit.

Hereinafter, a ventilation apparatus according to an embodiment of the present invention will be described in detail with reference to the drawings.

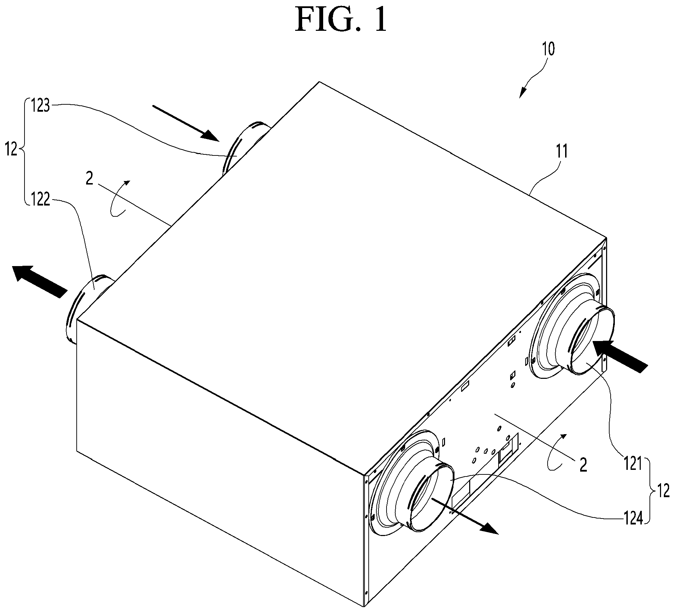

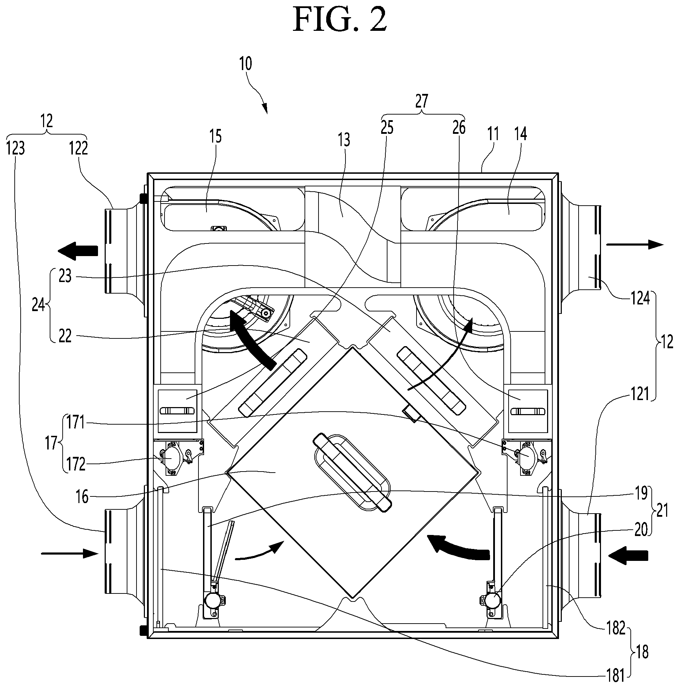

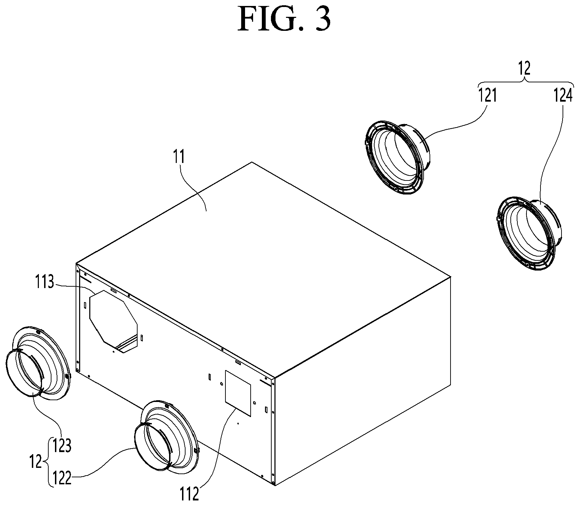

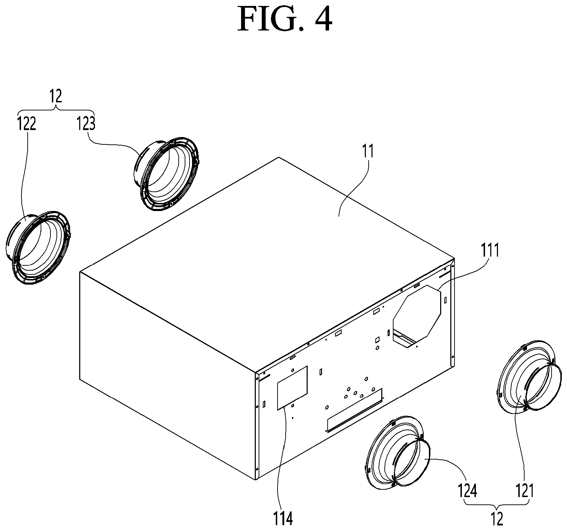

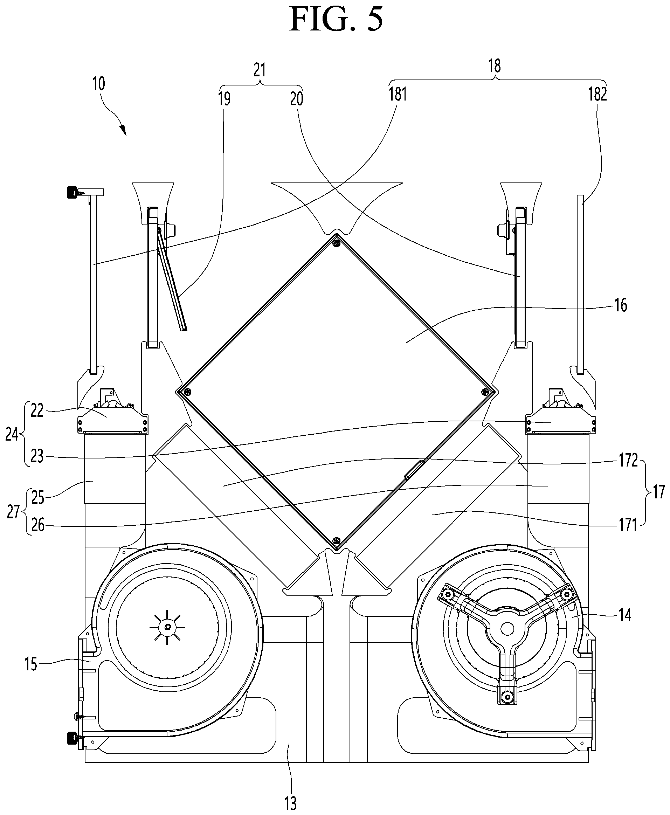

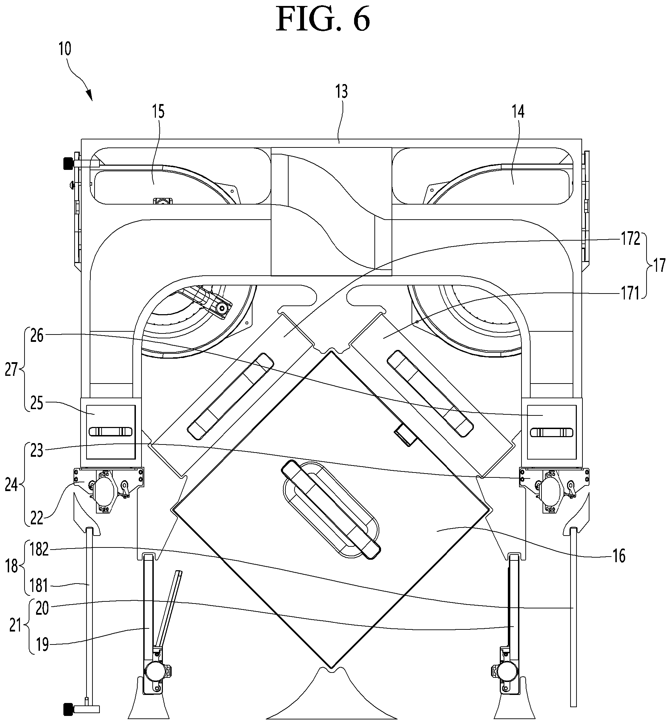

Figure 1 is a plan perspective view of a ventilation apparatus according to an embodiment of the present invention, Figure 2 is a bottom perspective view of the ventilation apparatus rotated along 2-2 of Figure 1, Figures 3 and 4 are a housing forming the ventilation apparatus and It is an exploded perspective view showing the coupling relationship between flanges, Figure 5 is a plan view of the ventilation apparatus with the housing and flange removed, and Figure 6 is a bottom view of the ventilation apparatus with the housing and flange removed.

Referring to Figures 1 to 6, the ventilation apparatus 10 according to an embodiment of the present invention includes a housing 11 forming an external appearance, a flange 12 coupled to both sides of the housing 11, a plurality of ventilation components accommodated therein. In the drawings, for convenience of explanation, the bottom of the ventilation apparatus 10 is shown to be open, but the housing 11 closes the bottom of the ventilation apparatus 10 and the bottom of the housing 11 shielding the bottom of the ventilation apparatus 10 may be a cover that can be rotated by a hinge.

In detail, an indoor air inlet 111 and an outdoor air outlet 114 are formed on one of the left and right side surfaces of the housing 11, and an outdoor air inlet 113 and an indoor air outlet 112 are formed on the other of the left and right side surfaces of the housing 11.

In addition, the flange 12 includes an indoor air inlet flange 121 coupled to the indoor air inlet 111, an outdoor air outlet flange 124 coupled to the outdoor air outlet, an outdoor air inlet flange 113 coupled to the outdoor air inlet 113, and indoor air outlet flange 122 coupled to the indoor air outlet 112.

The plurality of ventilation components include a case 13 provided inside the housing 11, a total heat exchange element 16 disposed in the center of the case 13, and an intake fan 14 and an exhaust fan 15 seated on the inner upper surface of the case 13, a HEPA filter 17 disposed on the side surface of the total heat exchange element 16, and a pre-filter 18 disposed at each of the indoor air inlet 111 and the outdoor air inlet 113, a main damper module 21 disposed on each side of the indoor air inlet 111 and the outdoor air inlet 113, a bypass damper module 24 disposed on a side of the pre-filter 18, and a bypass filter unit 27 disposed on the outlet side of the bypass damper module 24.

In detail, the total heat exchange element 16 is disposed in the inner center of the case 13, in such a manner that the side surfaces of the heat exchange element 16 and the side surfaces of the case 13 intersect each other.

Additionally, the intake fan 14 is disposed inside the case 13, and the outlet of the intake fan 14 is coupled to the outdoor air outlet 114. In addition, the exhaust fan 15 is disposed inside the cage 13, and the outlet of the exhaust fan 15 is coupled to the indoor air outlet 112. Additionally, the intake fan 14 and the exhaust fan 15 are arranged to be symmetrical with respect to the line that bisects the case 13. The line that passes between the intake fan 14 and the exhaust fan 15 and bisects the case 13 is designed to pass through two opposing corners of the heat exchange element 16. Therefore, when the ventilation apparatus 10 is installed in one of the two households designed with a symmetrical structure, the intake fan 14 sucks in outdoor air and supplies it indoors, and the exhaust fan 15 sucks in indoor air and discharges it outdoors. On the other hand, when the ventilation apparatus 10 is installed in the other one of the two households designed with a symmetrical structure, the intake fan 14 functions as an exhaust fan and the exhaust fan 15 functions as an intake fan.

Meanwhile, the pre-filter 18 includes an intake side pre-filter 181 mounted on the outdoor air inlet 113 and an exhaust side pre-filter 182 mounted on the indoor air inlet 111.

The outdoor air that has passed through the intake side pre-filter 181 flows into the first side surface of the total heat exchange element 16, passes through the second side surface facing the first side surface, and guided into a space where the intake fan 14 is installed. And, the outdoor air sucked in by the intake fan 14 is supplied indoors through the outdoor air outlet 114.

The indoor air that has passed through the exhaust side pre-filter 182 flows into the third side surface of the total heat exchange element 16, passes through the fourth side surface facing the third side surface, and then guided into a space where the exhaust fan 15 is installed. And, the indoor air sucked in by the exhaust fan 15 is discharged outdoors through the indoor air outlet 112.

Here, the first side surface and the third side surface of the total heat exchange element 16 share one corner, and the second side surface and the fourth side surface of the total heat exchange element 16 share another corner. And, the one corner is defined as a corner facing the other corner.

In addition, the pre-filter 7 includes an intake side HEPA filter 171 placed on the second side surface of the total heat exchange element 16, and an exhaust side HEPA filter 172 placed on the fourth side surface of the total heat exchange element 16.

Meanwhile, the main damper module 21 includes an intake side main damper module 19 and an exhaust side main damper module 20. The intake side main damper module 19 is placed on the outdoor air supply passage connecting the outdoor air inlet 113 and the first side surface of the total heat exchange element 16. And, the exhaust side main damper module 19 is placed on the air exhaust flow passage connecting the indoor air inlet 111 and the third side surface of the total heat exchange element 16.

Additionally, the bypass damper module 24 includes an intake side bypass damper module 22 and an exhaust side bypass damper module 23. The intake side bypass damper module 22 is disposed on the side portion of the outdoor air inlet 113, and the exhaust side bypass module 23 is placed on the side portion of the indoor air inlet 111.

A separated space is formed between the outdoor air inlet 113 and the intake side main damper module 19, one side surface of the separated space is shielded by the side surface of the case 13 or the side surface of the housing 11, and the intake side bypass damper module 22 is disposed on the other side surface of the separated space.

In addition, a separated space is also formed between the indoor air inlet 111 and the exhaust side main damper module 20, and one side surface of the separated space is shielded by the side surface of the case 13 or the side surface of the housing 11, and the exhaust side bypass damper module 23 is disposed on the other side surface of the separated space.

The bypass filter unit 27 includes an intake side bypass filter unit 25 and an exhaust side bypass filter unit 26. The intake side bypass filter unit 25 is disposed adjacent to the intake side bypass damper module 22, and the exhaust side bypass filter unit 26 is disposed adjacent to the exhaust side bypass damper module 23.

Therefore, the outdoor air that has passed through the intake side bypass damper module 22 is purified while passing through the intake side bypass filter unit 25 and then supplied indoors, and the indoor air that has passed through the exhaust side bypass damper module 23 is purified while passing through the exhaust side bypass filter unit 26 and then discharged outdoors. In addition, the outdoor air and indoor air passing through the bypass filter units 25 and 26, respectively, are directly supplied indoors or discharged outdoors without passing through the total heat exchange element 16.

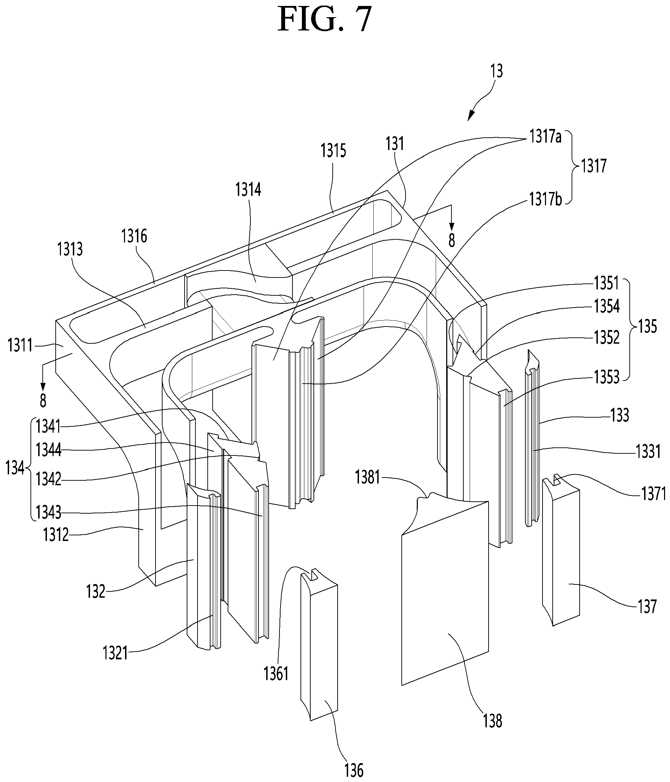

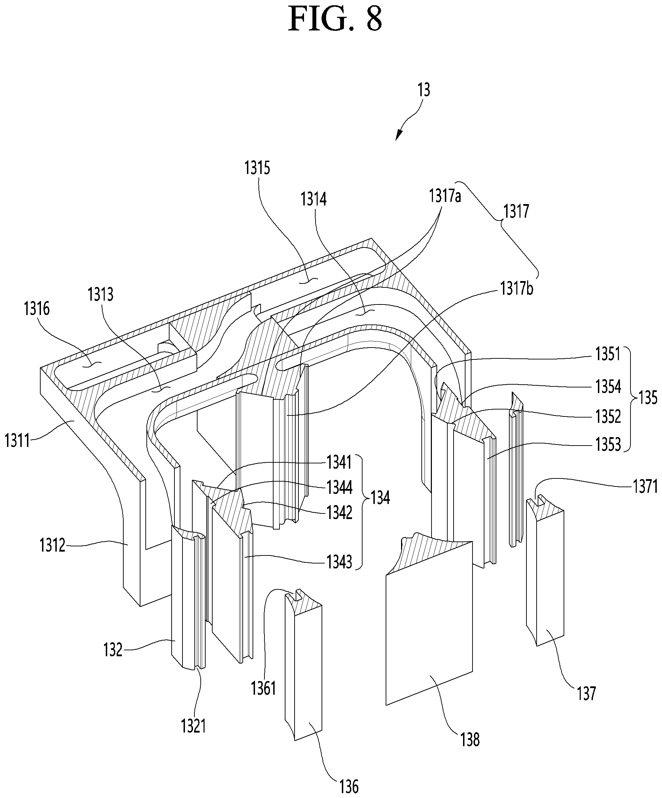

Figure 7 is a bottom perspective view of a case constituting a ventilation apparatus according to an embodiment of the present invention, and Figure 8 is a cross-sectional perspective view of the case cut along 8-8 in Figure 7.

Referring to Figures 7 and 8, the case 13 constituting the ventilation apparatus 10 according to an embodiment of the present invention includes a bypass guide 131, an intake side pre-filter support wall 132, and an exhaust side pre-filter support wall 133, an intake side center wall 134, an exhaust side center wall 135, an intake side main damper support wall 136, an exhaust side main damper support wall 137, and a heat exchange element support wall 138. And, although these components are shown as separate from each other in the drawing, they can be designed as a single piece.

The top surface of the case 13 shown in the drawing is a surface selectively shielded by a cover rotatably coupled to the bottom surface of the housing 11. That is, in the drawing, the part shielded by the cover is recognized as the top surface, but when the ventilation apparatus 10 is installed on the ceiling, it is corresponding to the bottom surface of the case 13.

In detail, the bypass guide 131 includes a horizontal portion 1311, a pair of vertical portions 1312 bent at both edges of the horizontal portion 1311, and a central partition wall 1317 extending from an edge of the center portion of the horizontal portion 1311 in a direction perpendicular to the horizontal portion 1311. The indoor air and outdoor air flowing into the ventilation apparatus 10 are not mixed by the central partition wall 1317 and are guided to the intake fan 14 and the exhaust fan 15, respectively.

In detail, the bypass guide 131 is formed with an intake side bypass passage 1313, an exhaust side bypass passage 1314, an intake guide hole 1315, and an exhaust guide hole 1316.

The intake side bypass passage 1313 starts from the vertical portion 1311 formed at one edge of the bypass guide 131 and extends along the horizontal portion 1311 towards the other edge of the bypass guide 131. The exhaust side bypass passage 1314 starts from the vertical portion 1311 formed at the other edge of the bypass guide 131 and extends along the horizontal portion 1311, towards one edge of the bypass guide 131.

The intake guide hole 1315 is formed on the other edge of the bypass guide 131, and the exhaust guide hole 1316 is formed on one edge of the bypass guide 131. That is, the intake guide hole 1315 and the exhaust guide hole 1316 are formed to be symmetrical to each other about a line that bisects the bypass guide 131 while passing through the central partition wall 1317.

Accordingly, the intake side bypass passage 1313 is connected to the intake guide hole 1315, and the exhaust side bypass passage 1314 is connected to the exhaust guide hole 1316. And, in the central portion of the bypass guide 131, the intake side bypass passage 1313 and the exhaust side bypass passage 1314 intersect in the vertical direction.

For example, the intake side bypass passage 1313 and the exhaust side bypass passage 1314 intersect in an X shape at the center of the bypass guide 131, and one of the intake side bypass passage 1313 and the exhaust side bypass passages 1314 may be formed above the other of the intake side bypass passage 1313 and the exhaust side bypass passages 1314.

In this way, the intake side bypass passage 1313 and the exhaust side bypass passage 1314 are provided in shapes that are symmetrical to each other, so that the single-shaped ventilation apparatus 10 can be easily installed in two households that are designed symmetrically. This eliminates the need for a separate flow passage conversion kit.

Meanwhile, the central partition wall 1317 protruding from the center of the bypass guide 131, like the vertical portion 1312, is formed to have a length that contacts the upper and lower surfaces of the housing 11. And, the central partition wall 1317 has a substantially triangular cross-sectional shape. Additionally, a HEPA filter mounting grooves 1317a are formed on one edge and the other edge of the central partition wall 1317, and a heat exchange element mounting groove 1317b is formed on a corner where the one edge meets the other edge.

More specifically, it can be explained that the central partition wall 1317 forms an isosceles triangular cross section, HEPA filter mounting grooves 1317a are formed on two sides of the same length, and the heat exchange element mounting groove 1317b is mounted at a corner where two sides of the same length meet.

The intake side pre-filter support wall 132 and the exhaust side pre-filter support wall 133 are formed on both sides of the case 13, respectively, and are formed at positions facing each other. In addition, mounting grooves 1321 and 1331 are formed at one edges of the intake side pre-filter support wall 132 and the exhaust side pre-filter support wall 133, respectively, and one edge of the intake side pre-filter 181 and one edge of the exhaust side pre-filter 182 are inserted in the mounting grooves 1321 and 1331. The other edges of the intake side pre-filter 181 and the exhaust side pre-filter 182 may be supported by being inserted into grooves (not shown) formed on the inner side surfaces of the housing 11.

The intake side central wall 134 is disposed at a point spaced apart from the intake side pre-filter support wall 132 towards the center of the case 13. A HEPA filter mounting groove 1341 is formed on one side of the intake side central wall 134 into which one edge of the intake side HEPA filter 172 is inserted, and the HEPA filter mounting groove 1341 faces the HEPA filter mounting groove (1317a) of the central partition wall 1317. A total heat exchange element mounting groove 1342 is formed in the center of the inner surface of the intake side central wall 134, and a main damper mounting groove 1343 is formed in the other edge of the intake side central wall 134. Also, a bypass damper mounting groove 1344 is formed on the outer surface of the intake side central wall 134.

The exhaust side central wall 135 is disposed opposite the intake side central wall 134, and the exhaust side central wall 135 is disposed at a point spaced apart from the exhaust side pre-filter support wall 133 towards the center of the case 12. The exhaust side central wall 135 has a shape symmetrical to the intake side central wall 134. That is, a HEPA filter mounting groove 1351 is formed on one side of the exhaust side central wall 135, and the HEPA filter mounting groove 1351 faces the HEPA filter mounting groove 1317b of the central partition wall 1317. A heat exchange element mounting groove 1352 is formed in the center of the inner surface of the exhaust side central wall 135, and a main damper mounting groove 1353 is formed in the other edge of the exhaust side central wall 134. Also, a bypass damper mounting groove 1354 is formed on the outer surface of the exhaust side central wall 135.

A main damper mounting groove 1361 is formed on one edge of the intake side main damper support wall 136, and the other edge is in close contact with the side surface of the housing 11. The main damper mounting groove 1361 faces the main damper mounting groove 1345 of the intake side central wall 134. Accordingly, both side ends of the intake side main damper module 19 are supported by being inserted into the main damper mounting grooves 1343 and 1361.

The exhaust side main damper support wall 137 is disposed opposite the intake side main damper support wall 136 and has a symmetrical shape. In addition, a main damper mounting groove 1371 is formed on one edge of the exhaust side main damper support wall 137, and the other edge is in close contact with the side surface of the housing 11. The main damper mounting groove 1371 faces the main damper mounting groove 1352 of the exhaust side central wall 135. Accordingly, both side ends of the exhaust side main damper module 20 are supported by being inserted into the main damper mounting grooves 1353 and 1371.

The total heat exchange element support wall 138 is installed between the intake side main damper support wall 136 and the exhaust side main damper support wall 137. Additionally, a heat exchange element mounting groove 1381 is formed in the inner center of the heat exchange element support wall 138.

According to this structure, the four corners of the hexahedral-shaped heat exchange element are supported by being inserted into the heat exchange element mounting grooves 1317b, 1342, 1381, and 1352, respectively.

In addition, depending on whether the intake side main damper module 19 and the intake side bypass damper module 22 are opened or closed, the outdoor air flowing in through the outdoor air inlet 113 is guided to one of or both the total heat exchange element 16 and the intake side bypass passages 1313. In addition, depending on whether the exhaust side main damper module 20 and the exhaust side bypass damper module 23 are opened or closed, the indoor air flowing in through the indoor air inlet 111 is guided to one or both the total heat exchange element 16 and the exhaust side bypass passages 1314.

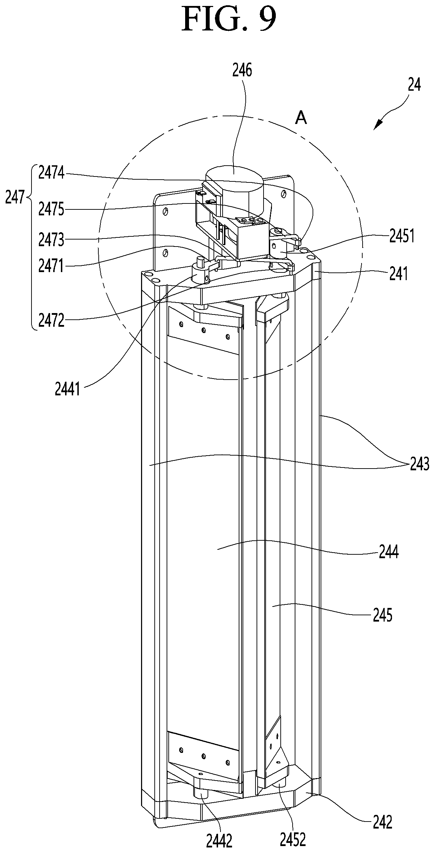

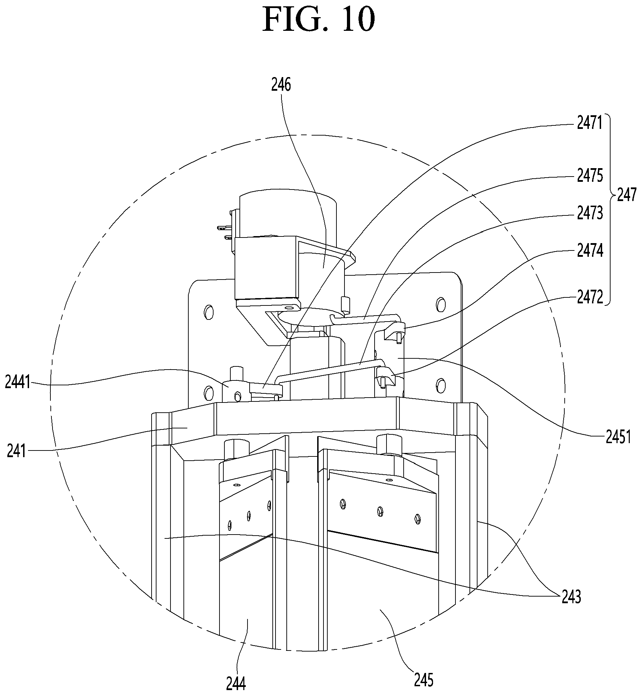

Figure 9 is a perspective view of a bypass damper module constituting a ventilation apparatus according to an embodiment of the present invention, and Figure 10 is an enlarged view of portion A of Figure 9.

Referring to Figures 9 and 10, the bypass damper module 24 includes an upper bracket 241, a lower bracket 242, and a pair of supports connecting the upper bracket 241 and the lower bracket 242. (243), a first damper 244 and a second damper 245 mounted between the pair of supports 243, and a drive motor 246 and an opening/closing link 247 that drive the first and second dampers 244 and 245.

In detail, the drive motor 246 and the opening/closing link 247 are mounted on the upper surface of the upper bracket 241. In addition, the first rotation shaft 2441, which is the rotation center of the first damper 244, and the second rotation shaft 2451, which is the rotation center of the second damper 245, pass through the upper bracket 241. The first and second rotation shafts 2441 and 2451 are rotation shafts extending from the upper surfaces of the first and second dampers 244 and 245. Additionally, the rotation shafts 2442 and 2452 extending from the bottom surfaces of the first and second dampers 244 and 245 pass through the lower bracket 242.

The opening/closing link 247 includes a first link 2471, a second link 2472, a connecting link 2473, a driving link 2474, and a transmission gear 2475.

In detail, a reduction gear module is provided inside the drive motor 246, and the rotational force of the drive motor 246 is transmitted to the reduction gear module to reduce speed. Then, the reduced rotational force is transmitted to the transmission gear 2475 connected to the rotation shaft of the reduction gear module.

The second link 2471 extends on the outer peripheral surface of the first rotation shaft 2441, and the second link 2472 and the driving link 2474 extend on the outer peripheral surface of the second rotation shaft 2451. The driving link 2474 extends at a point spaced upward from the second link 2472, and may extend at a point spaced apart from the second link 2472 at a predetermined angle in the circumferential direction of the second rotation shaft 2451.

The connection link 2473 is a link connecting the first link 2471 and the second link 2472, and the transmission link 2475 is connected to the driving link 2474. The first link 2471 and the second link 2472 extend in opposite directions, and the connecting link 2473 connects the ends of the first and second links 2471 and 2472.

By this connection structure, when a drive signal is input to the drive motor 246, the decelerated rotational force of the drive motor 246 is transmitted to the transmission link 2475 to rotate the transmission link 2475. The rotational force of the transmission link 2475 is transmitted to the driving link 2474 to rotate the second rotation shaft 2451.

As the second rotation shaft 2451 rotates, the second damper 245 rotates, and at the same time, the second link 2472 rotates. When the second link 2472 rotates, the first link 2471 and the first rotation shaft 2441 rotate by the connecting link 2473. And, as the first rotation shaft 2441 rotates, the first damper 244 rotates together.

At this time, since the first link 2471 and the second link 2472 extend in opposite directions, if the first link 2471 and the second link 2472 extend in the first or second direction, one side end of the first damper 244 and one side end of the second damper 245 rotate in a direction that they approach each other (first direction) or in a direction that they move away from each other (second direction).

In detail, when the first and second dampers 244 and 245 rotate in the first direction and the side ends of the first and second dampers 244 and 245 meet, the inlets of the bypass passages 1313 and 1314 are closed. On the other hand, when the first and second dampers 244 and 245 rotate in the second direction and become parallel to each other, the inlets of the bypass passages 1313 and 1314 are opened to the maximum.

Here, the meaning that the first link 2471 and the second link 2472 extend in opposite directions should be interpreted to include not only that the extension lines of the two links extend completely parallel, but also that the extension lines intersect or cross each other.

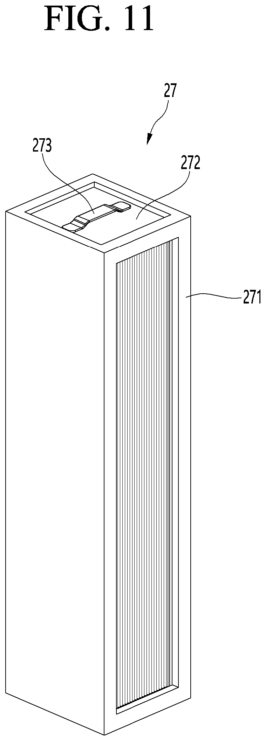

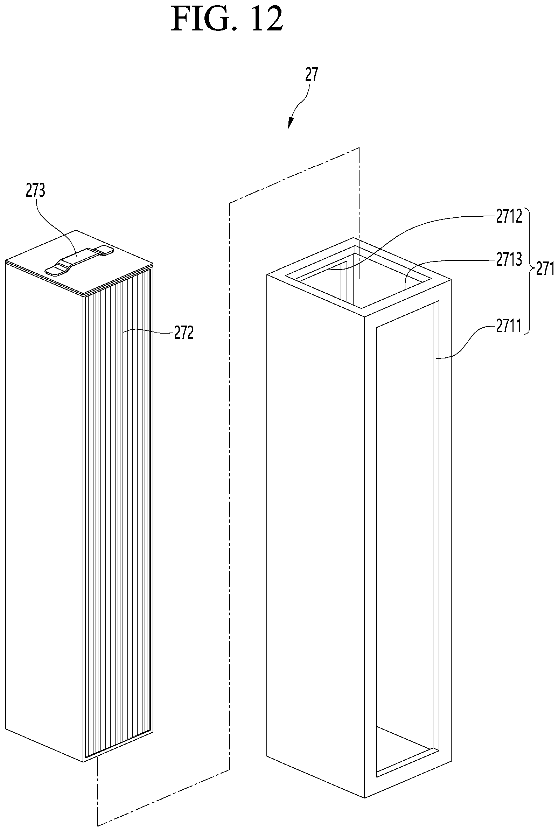

Figure 11 is a perspective view of a bypass filter unit constituting a ventilation apparatus according to an embodiment of the present invention, and Figure 12 is an exploded perspective view of the bypass filter unit.

Referring to Figures 11 and 12, the bypass filter unit 27 according to an embodiment of the present invention includes a filter case 271 and a filter 272 inserted into the filter case 271.

In detail, a handle 273 is mounted on the upper or lower surface of the filter 272. The handle is a part that the user holds with his or her hand when inserting or withdrawing the filter 272 into the filter case 271.

In addition, a filter insertion hole 2723 is formed on the upper or lower surface of the case 271, and an inlet 2711 and an outlet 2712 are respectively formed on two of the four sides of the case 271 that face each other. And, the inlet 2711 is located on the outlet side of the bypass damper module 24.

Therefore, when the bypass damper module 24 is opened, the outdoor air or indoor air flowing into the outdoor air inlet 113 or the indoor air inlet 111 sequentially passes through the inlet 2711, the filter 272, and the outlet 2712, and then guided to the intake side bypass passage 1313 or the exhaust side bypass passage 1314.

## Claims

1. A ventilation apparatus, comprising:
a housing (11), including:
an indoor air inlet (111) and an outdoor air outlet (114) spaced apart from each other on one side of the housing (11); and
an outdoor air inlet (113) and an indoor air outlet (112) spaced apart from each other on the other side of the housing (11) opposite to the one side, wherein the outdoor air inlet (113) is formed at a position opposite to the indoor air inlet (111) and the indoor air outlet (112) is formed at a position opposite to the outdoor air outlet (114);
a case (13) accommodated in the housing (11);
an intake fan (14) mounted inside the case (13) and having an outlet connected to the outdoor air outlet (114);
an exhaust fan (15) mounted inside the case (13) and having an outlet connected to the indoor air outlet (112); and
a total heat exchange element (16) mounted inside the case (13) and placed at a region where a flow passage connecting the indoor air inlet (111) and the indoor air outlet (112) and a flow passage connecting the outdoor air inlet (113) and the outdoor air outlet (114) intersect,
wherein an intake side bypass passage (1313) that guides outdoor air flowing into the outdoor air inlet (113) to a space where the intake fan (14) is located, and an exhaust side bypass passage (1314) that guides indoor air flowing into the indoor air inlet (111) to a space where the exhaust fan (15) is located, by bypassing the total heat exchange element (16), are respectively formed on surfaces of the case (13).

2. The ventilation apparatus according to claim 1, wherein the case (13) includes:
an intake guide hole (1315) formed at a side region of the case (13) adjacent to the outdoor air outlet (114) and communicating with the space where the intake fan (14) is placed;
an exhaust guide hole (1316) formed at another side region of the case (13) adjacent to the indoor air outlet (112) and communicating with the space where the exhaust fan (15) is placed,
wherein an outlet of the intake side bypass passage (1313) communicates with the intake guide hole (1315),
and wherein an outlet of the exhaust side bypass passage (1314) communicates with the exhaust guide hole (1316).

3. The ventilation apparatus according to claim 2, wherein the intake side bypass passage (1313) and the exhaust side bypass passage (1314) are configured to form shapes symmetrical about an imaginary dividing plane that bisects the case (13) between the intake guide hole (1315) and the exhaust guide hole (1316).

4. The ventilation apparatus according to claim 2 or 3, wherein an inlet of the intake side bypass passage (1313) is spaced apart from the exhaust guide hole (1316) in a direction approaching the outdoor air inlet (113), and wherein an inlet of the exhaust side bypass passage (1314) is spaced apart from the intake guide hole (1315) in a direction approaching the indoor air inlet (111).

5. The ventilation apparatus according to any one of claims 2 to 4, wherein the intake side bypass passage (1313) includes:
a first portion extending from the inlet of the intake side bypass passage (1313) towards the exhaust guide hole (1316) and bent to extend along an edge of the exhaust guide hole (1316); and
a second part bent at an end of the first part to communicate with the intake guide hole (1315),
and wherein the exhaust side bypass passage (1314) includes:
a third portion extending from the inlet of the exhaust side bypass passage (1314) towards the intake guide hole (1315) and bent to extend along an edge of the intake guide hole (1315); and
a fourth part bent at an end of the second part to communicate with the exhaust guide hole (1316).

6. The ventilation apparatus according to claim 5, insofar as depending on claim 3, wherein the second part intersects the fourth part while passing above or below the fourth part,
and wherein the imaginary dividing plane passes a region where the second portion and the fourth portion intersect.

7. The ventilation apparatus according to any one of claims 1 to 6, further comprising:
an intake side bypass damper module (22) placed on the inlet of the intake side bypass passage (1313); and
an exhaust side bypass damper module (23) placed on the inlet of the exhaust side bypass passage (1314).

8. The ventilation apparatus according to claim 7, further comprising:
an intake side bypass filter unit (25) placed between the inlet of the intake side bypass passage (1313) and the intake side bypass damper module (22); and
an exhaust side bypass filter unit (26) placed between the inlet of the exhaust side bypass passage (1314) and the exhaust side bypass damper module (23).

9. The ventilation apparatus according to any one of claims 1 to 8, further comprising:
an intake side pre-filter (181) installed at the outdoor air inlet (113); and
an exhaust side pre-filter (182) installed at the indoor air inlet (111).

10. The ventilation apparatus according to any one of claims 1 to 9, wherein the total heat exchange element (16) includes four side surfaces facing the four corners of the housing, respectively,
wherein the four side surfaces include:
a first side surface facing the outdoor air inlet (113);
a second side surface facing the outdoor air outlet (114) and being an opposite side of the first side surface;
a third side surface facing the indoor air inlet (111); and
a fourth side surface facing the indoor air outlet (112) and being opposite side of the third side surface.

11. The ventilation apparatus according to claim 10, further comprising:
an intake side HEPA filter (171) disposed adjacent to the second side surface; and
an exhaust side HEPA filter (172) disposed adjacent to the fourth side surface.

12. The ventilation apparatus according to claim 10 or 11, further comprising:
an intake side main damper module (19) disposed at a flow passage connecting the outdoor air inlet (113) and the first side surface; and
an exhaust side main damper module (20) disposed at a flow passage connecting the indoor air inlet (111) and the third side surface.

13. The ventilation apparatus according to claim 12, wherein, when the intake side main damper module (19) is opened and the intake side bypass damper module (22) is closed, the outdoor air flowing into the outdoor air inlet (113) passes through the first side surface and the second side surface and is then guided to the intake fan (14),
wherein, when the intake side main damper module (19) is closed and the intake side bypass damper module (22) is opened, the outdoor air flowing into the outdoor air inlet (113) passes through the intake side bypass filter unit (25) and is then guided to the intake side bypass passage (1313),
wherein, when the exhaust side main damper module (20) is opened and the exhaust side bypass damper module (23) is closed, the indoor air flowing into the indoor air inlet (111) passes through the third side surface and the fourth side surface and is then guided to the exhaust fan (15),
and wherein, when the exhaust side main damper module (20) is closed and the exhaust side bypass damper module (23) is opened, the indoor air flowing into the indoor air inlet (111) passes through the exhaust side bypass filter unit (26) and is then guided to the exhaust side bypass passage (1314).

14. The ventilation apparatus according to claim 12, wherein the case (13) includes:
a bypass guide (131) in which the intake and exhaust side bypass passages (1313, 1314), the intake guide hole (1315) and the exhaust guide hole (1316) are formed,
wherein the bypass guide comprises:
a central partition wall (1317) that extends from an inner side of the case (13) to support a first corner of the total heat exchange element (16);
an intake side central wall (134) supporting at least one side surface of the intake side main damper module (19) and a second corner of the total heat exchange element (16);
an intake side main damper support wall (136) supporting the other side of the intake side main damper module (19);
a total heat exchange element support wall (138) supporting a third corner of the total heat exchange element (16);
an exhaust side central wall (135) supporting at least one side surface of the exhaust side main damper module (20) and a fourth corner of the total heat exchange element (16); and
an exhaust side main damper support wall (137) supporting the other side of the exhaust side main damper module (20).

15. The ventilation apparatus according to claim 14, wherein the flow passage connecting the indoor air inlet (111) and the indoor air outlet (112), and the flow passage connecting the outdoor air inlet (113) and the outdoor air outlet (114), are separated from each other by at least the central partition wall (1317), the intake side central wall (134), the total heat exchange element support wall (138), and the exhaust side central wall (135).

## Amended claims

### Amended claims in accordance with Rule 137(2) EPC.

1. A ventilation apparatus, comprising:
a housing (11), including:
an indoor air inlet (111) and an outdoor air outlet (114) spaced apart from each other on one side of the housing (11); and
an outdoor air inlet (113) and an indoor air outlet (112) spaced apart from each other on the other side of the housing (11) opposite to the one side, wherein the outdoor air inlet (113) is formed at a position opposite to the indoor air inlet (111) and the indoor air outlet (112) is formed at a position opposite to the outdoor air outlet (114);
a case (13) accommodated in the housing (11);
an intake fan (14) mounted inside the case (13) and having an outlet connected to the outdoor air outlet (114);
an exhaust fan (15) mounted inside the case (13) and having an outlet connected to the indoor air outlet (112); and
a total heat exchange element (16) mounted inside the case (13) and placed at a region where a flow passage connecting the indoor air inlet (111) and the indoor air outlet (112) and a flow passage connecting the outdoor air inlet (113) and the outdoor air outlet (114) intersect,
wherein an intake side bypass passage (1313) that guides outdoor air flowing into the outdoor air inlet (113) to a space where the intake fan (14) is located, and an exhaust side bypass passage (1314) that guides indoor air flowing into the indoor air inlet (111) to a space where the exhaust fan (15) is located, by bypassing the total heat exchange element (16), are respectively formed on surfaces of the case (13),
wherein the case (13) includes:
an intake guide hole (1315) formed at a side region of the case (13) adjacent to the outdoor air outlet (114) and communicating with the space where the intake fan (14) is placed;
an exhaust guide hole (1316) formed at another side region of the case (13) adjacent to the indoor air outlet (112) and communicating with the space where the exhaust fan (15) is placed,
wherein an outlet of the intake side bypass passage (1313) communicates with the intake guide hole (1315),
and wherein an outlet of the exhaust side bypass passage (1314) communicates with the exhaust guide hole (1316),
wherein one of the intake side bypass passage (1313) and the exhaust side bypass passage (1314) is formed above the other of the intake side bypass passage (1313) and the exhaust side bypass passage (1314),
and wherein the intake side bypass passage (1313) and the exhaust side bypass passage (1314) are configured to form shapes symmetrical about an imaginary dividing plane that bisects the case (13) between the intake guide hole (1315) and the exhaust guide hole (1316).

2. The ventilation apparatus according to claim 1, wherein an inlet of the intake side bypass passage (1313) is spaced apart from the exhaust guide hole (1316) in a direction approaching the outdoor air inlet (113),
and wherein an inlet of the exhaust side bypass passage (1314) is spaced apart from the intake guide hole (1315) in a direction approaching the indoor air inlet (111).

3. The ventilation apparatus according to any one of claims 1 to 2, wherein the intake side bypass passage (1313) includes:
a first portion extending from the inlet of the intake side bypass passage (1313) towards the exhaust guide hole (1316) and bent to extend along an edge of the exhaust guide hole (1316); and
a second portion bent at an end of the first part to communicate with the intake guide hole (1315),
and wherein the exhaust side bypass passage (1314) includes:
a third portion extending from the inlet of the exhaust side bypass passage (1314) towards the intake guide hole (1315) and bent to extend along an edge of the intake guide hole (1315); and
a fourth portion bent at an end of the second part to communicate with the exhaust guide hole (1316).

4. The ventilation apparatus according to claim 3, insofar as depending on claim 1, wherein the second portion intersects the fourth portion while passing above or below the fourth portion,
and wherein the imaginary dividing plane passes a region where the second portion and the fourth portion intersect.

5. The ventilation apparatus according to any one of claims 1 to 4, further comprising:
an intake side bypass damper module (22) placed on the inlet of the intake side bypass passage (1313); and
an exhaust side bypass damper module (23) placed on the inlet of the exhaust side bypass passage (1314).

6. The ventilation apparatus according to claim 5, further comprising:
an intake side bypass filter unit (25) placed between the inlet of the intake side bypass passage (1313) and the intake side bypass damper module (22); and
an exhaust side bypass filter unit (26) placed between the inlet of the exhaust side bypass passage (1314) and the exhaust side bypass damper module (23).

7. The ventilation apparatus according to any one of claims 1 to 6, further comprising:
an intake side pre-filter (181) installed at the outdoor air inlet (113); and
an exhaust side pre-filter (182) installed at the indoor air inlet (111).

8. The ventilation apparatus according to any one of claims 1 to 7, wherein the total heat exchange element (16) includes four side surfaces facing the four corners of the housing, respectively,
wherein the four side surfaces include:
a first side surface facing the outdoor air inlet (113);
a second side surface facing the outdoor air outlet (114) and being an opposite side of the first side surface;
a third side surface facing the indoor air inlet (111); and
a fourth side surface facing the indoor air outlet (112) and being opposite side of the third side surface.

9. The ventilation apparatus according to claim 8, further comprising:
an intake side HEPA filter (171) disposed adjacent to the second side surface; and
an exhaust side HEPA filter (172) disposed adjacent to the fourth side surface.

10. The ventilation apparatus according to claim 8 or 9, further comprising:
an intake side main damper module (19) disposed at a flow passage connecting the outdoor air inlet (113) and the first side surface; and
an exhaust side main damper module (20) disposed at a flow passage connecting the indoor air inlet (111) and the third side surface.

11. The ventilation apparatus according to claim 10, wherein, when the intake side main damper module (19) is opened and the intake side bypass damper module (22) is closed, the outdoor air flowing into the outdoor air inlet (113) passes through the first side surface and the second side surface and is then guided to the intake fan (14),
wherein, when the intake side main damper module (19) is closed and the intake side bypass damper module (22) is opened, the outdoor air flowing into the outdoor air inlet (113) passes through the intake side bypass filter unit (25) and is then guided to the intake side bypass passage (1313),
wherein, when the exhaust side main damper module (20) is opened and the exhaust side bypass damper module (23) is closed, the indoor air flowing into the indoor air inlet (111) passes through the third side surface and the fourth side surface and is then guided to the exhaust fan (15),
and wherein, when the exhaust side main damper module (20) is closed and the exhaust side bypass damper module (23) is opened, the indoor air flowing into the indoor air inlet (111) passes through the exhaust side bypass filter unit (26) and is then guided to the exhaust side bypass passage (1314).

12. The ventilation apparatus according to claim 10, wherein the case (13) includes:
a bypass guide (131) in which the intake and exhaust side bypass passages (1313, 1314), the intake guide hole (1315) and the exhaust guide hole (1316) are formed,
wherein the bypass guide comprises:
a central partition wall (1317) that extends from an inner side of the case (13) to support a first corner of the total heat exchange element (16);
an intake side central wall (134) supporting at least one side surface of the intake side main damper module (19) and a second corner of the total heat exchange element (16);
an intake side main damper support wall (136) supporting the other side of the intake side main damper module (19);
a total heat exchange element support wall (138) supporting a third corner of the total heat exchange element (16);
an exhaust side central wall (135) supporting at least one side surface of the exhaust side main damper module (20) and a fourth corner of the total heat exchange element (16); and
an exhaust side main damper support wall (137) supporting the other side of the exhaust side main damper module (20).

13. The ventilation apparatus according to claim 12, wherein the flow passage connecting the indoor air inlet (111) and the indoor air outlet (112), and the flow passage connecting the outdoor air inlet (113) and the outdoor air outlet (114), are separated from each other by at least the central partition wall (1317), the intake side central wall (134), the total heat exchange element support wall (138), and the exhaust side central wall (135).
